(19) Europäisches Patentamt

European Patent Office

Office européen des brevets

(11) **EP 1 457 188 A1**

(12) **EUROPÄISCHE PATENTANMELDUNG**

(43) Veröffentlichungstag:
**15.09.2004 Patentblatt 2004/38**

(51) Int Cl.⁷: **A61G 17/00**

(21) Anmeldenummer: 03021264.1

(22) Anmeldetag: **19.09.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(30) Priorität: **12.03.2003 DE 10311186**

(71) Anmelder: **Keller Grundbau GmbH
63067 Offenbach/Main (DE)**

(72) Erfinder: **Seher, Winfried
77749 Hohlberg (DE)**

(74) Vertreter: **Neumann, Ernst Dieter, Dipl.-Ing. et al
Harwardt Neumann Patent- und Rechtsanwälte,
Brandstrasse 10
53721 Siegburg (DE)**

Bemerkungen:
Ein Antrag gemäss Regel 88 EPÜ auf Berichtigung
der Beschreibung liegt vor. Über diesen Antrag wird
im Laufe des Verfahrens vor der Prüfungsabteilung
eine Entscheidung getroffen werden (Richtlinien für
die Prüfung im EPA, A-V, 3.).

(54) **Verfahren zur Beschleunigung der Restverwesung von Wachsleichen**

(57) Verfahren zur Beschleunigung der Restverwesung von in der ursprünglichen Grablege liegenden Wachsleichen mit den Schritten

- Anbohren der Grablege;
- Einbringen eines Reagenzmittels für eine beschleunigte Verwesung in die Bestattung;
- Einmischen des Reagenzmittels in die Bestattung mit mechanischen Mitteln,

wobei als Reagenzmittel Branntkalk (CaO) verwendet wird.

FIG. 2

EP 1 457 188 A1

**Beschreibung**

Gebiet der Erfindung

Die Erfindung betrifft ein Verfahren zur Beschleunigung der Restverwesung von in der ursprünglichen Grablege befindlichen Wachsleichen. Das Leichenwachs wird auch als Adipocire bezeichnet. Dieser Begriff bedeutet im eigentlichen Fettwachsbildung. Mit dem Begriff Grablege ist der unmittelbare Ort der Bestattung nach Oberflächenkoordinaten und Tiefenlage bezeichnet. Die dort bestatteten Teile, also in der Regel Sarg und Leiche, in Sonderfällen auch andere Arten der Umhüllung wie Plastiksäcke und Leiche, werden im weiteren insgesamt als die Bestattung bezeichnet. Die Erfindung betrifft neben dem genannten Verfahren auch ein Bohr- und Mischgerät zur Durchführung des Verfahrens sowie ein Reagenzmittel, das bei der Durchführung des Verfahrens zur Anwendung gebracht wird.

Ein vielerorts auf Friedhöfen präsentes Problem besteht in der sogenannten Adipocire oder Wachsleichenbildung. Sie entsteht in redoximorphen Nekrosolen, also stauwasserhaltigen Friedhofsböden, die durch die verschiedensten vorab nicht erkannten Ursachen für eine normale Zersetzung von Leichen ungeeignet sind. Eine systematische Erforschung des Problems ist bisher nicht betrieben worden. Verschiedene Ursachen sind dafür verantwortlich wie z. B. ein ungenügender Lufthaushalt im Boden, stauende Nässe, luftdichte Särge, der vorhandene pH-Wert des Bodens und niedrige Bodentemperaturen.

Zum Vorschein kommen diese Probleme oft erst nach Ablauf der Belegungsintervalle von Grabstätten, die in Deutschland im allgemeinen 25 Jahre betragen. Beim Öffnen der alten Grabstätten findet man mitunter unerwartet Leichen vor, die wirken, als seien sie erst vor kurzer Zeit bestattet worden. Das hat für die Betreiber der Friedhöfe die ernsthafte Konsequenz, daß eine Neubelegung solcher Grabstätten ohne besondere Maßnahmen unmöglich ist.

Diese Tatsache stellt Kommunen in Verbindung mit der zunehmenden Flächenknappheit und steigenden Grundstückspreisen für Ersatzflächen oft vor unlösbare Schwierigkeiten.

Um diesen Problemen für die Zukunft zu begegnen, sind von der Industrie in zunehmendem Maße als Ersatz für herkömmliche Erdbestattungen neue Bestattungsformen angeboten worden, z. B. in Form von Grabkammersystemen, in denen die Zersetzung der Beerdigten unter kontrollierten Verhältnissen vonstatten geht.

Aus der NO 951 325 ist es bekannt, Bestattungen in Plastiksäcken, die sich unter Luftabschluß und ohne Flüssigkeitsverlust zu einer übelriechenden flüssigen Masse zersetzt haben, über Injektionssonden mit Kalkinjektionen zu behandeln, wobei die entstehende exotherme Reaktion mittels Meßsonden überwacht wird.

Keine Lösungsansätze sind bisher für alle potentiellen latenten und entdeckten Adipocire-Fälle angeboten worden.

Gegenstand der Erfindung

Hiervon ausgehend ist es Aufgabe der vorliegenden Erfindung ein Verfahren bereitzustellen, mit dem die genannten Adipocire-Fälle beseitigt oder vermieden werden können. Eine weiterführende Aufgabe liegt darin, eine geeignete Vorrichtung zur Durchführung des Verfahrens und ein bei dem Verfahren zur Anwendung bringbares Reagenzmittel vorzuschlagen.

Die Lösung besteht in einem Verfahren zur Beschleunigung der Restverwesung von in der ursprünglichen Grablege liegenden Wachsleichen, gekennzeichnet durch die Schritte

- Anbohren der Grablege
- Anbringen eines Reagenzmittels für eine beschleunigte Verwesung in die Bestattung
- Einmischen des Reagenzmittels in die Bestattung mit mechanischen Mitteln.

Hierbei wird vorzugsweise Branntkalk als Reagenzmittel verwendet. Gegebenenfalls kann dem Reagenzmittel Kaliumpermanganat als Oxidationsmittel und/oder Aktivkohle als Adsorptionsmittel zugemischt werden. Nach einem weiteren Ansatz kann Natronlauge alleine oder ergänzend als Reagenzmittel verwendet werden. Dies ist dann vorzuschlagen, wenn zu wenig freies oder gebundenes Wasser zur Einleitung einer Reaktion mit trockenem Reagenzmittel vorliegt.

Nach einer bevorzugten Verfahrensführung werden vorab Bohrungen zur Ableitung von Luft, insbesondere von Druckluft und zum Einbringen einer Temperatursonde sowie gegebenenfalls von Meßsonden anderer Art zur Überwachung der einzuleitenden Reaktion niedergebracht. Wenn das Einbringen eines trockenen Reagenzmittels, insbesondere von Branntkalk nicht zur Einleitung einer exothermen Reaktion führt, was anhand des Temperaturverlaufs überprüft werden kann, wird vorzugsweise Heißwasserdampf über ein Sondenrohr in die Grablege eingeleitet.

Das trockene Reagenzmittel, also insbesondere Branntkalk, kann mittels einer im Bohrgestänge einliegenden antreibbaren Schnecke niedergebracht werden oder mittels eines an das rohrförmige Bohrgestänge angeschlossenen Fördergebläses.

Nach dem Einbringen des Reagenzmittels und dem Einleiten der exothermen Reaktion können die Bohrlöcher mit einem luftdurchlässigen inerten Granulat verfüllt werden oder es können mit Filtern bestückte Entlüftungsrohre in die Bohrlöcher eingesetzt werden.

Die Lösung besteht weiterhin in einem Bohr- und Mischgerät, umfassend ein höhenverfahrbares Bohrgestänge mit einem Bohrkopf, an dem zumindest ein wegklappbarer Rührsporn, der in einer ersten Drehrichtung des Bohrkopfes sich an das Bohrgestänge anlegt und in einer zweiten Drehrichtung des Bohrkopfes vom Bohrgestänge etwa rechtwinklig wegklappt, angebracht ist, wobei das Bohrgestänge rohrförmig ist und eine relativ zum Bohrgestänge antreibbare Förderschnecke enthält, und wobei das obere Ende des Bohrgestänges mit einem Aufgabebehälter für pulverförmiges Reaktionsmittel verbunden ist.

Die Lösung besteht alternativ in einem Bohr- und Mischgerät zur Durchführung des Verfahrens, umfassend ein höhenverfahrbares Bohrgestänge mit einem Bohrkopf, an dem zumindest ein wegklappbarer Rührsporn, der in einer ersten Drehrichtung des Bohrkopfes sich an das Bohrgestänge anlegt und in einer zweiten Drehrichtung des Bohrkopfes vom Bohrgestänge etwa rechtwinklig wegklappt, angebracht ist, wobei das Bohrgestänge rohrförmig ist und wobei das obere Ende des Bohrgestänges mit einem Aufgabebehälter und einem Fordergebläse für pulverförmiges Reagenzmittel verbunden ist.

Im ersten Fall wird trockenes Reaktionsmittel über eine Förderschnecke mit vergleichsweise dichter Konsistenz eingebracht und in der Grablege untergemischt; im zweiten Fall wird mit Druckluft fluidisiertes Reaktionsmittel eingeblasen, wobei eine Entlüftungsbohrung erforderlich ist.

Als besonders geeignet zur Durchführung des Verfahrens wird ein Reagenzmittel vorgeschlagen, das Branntkalk CaO und Kaliumpermanganat $KMnO_4$ und gegebenenfalls Aktivkohle $C_6$ in geeigneten Mischungsverhältnissen umfaßt.

In einem Mangel an Bodenwasser kann das Reagenzmittel Natronlauge NaOH sein, das ausschließlich oder als Zusatz zum Branntkalk eingebracht wird. Vorzugsweise wird hierfür eine gesonderte Vorrichtung mit einem Tack, einer Pumpe und einer Förderlanze verwendet.

Verfahrenskomponenten

Das erfindungsgemäße Verfahren besteht damit im wesentlichen aus den folgenden Komponenten:

einem thermochemischen Prozeß durch ein Reagenzmittel, der den zum Stillstand gekommenen oder von Anfang an unterbliebenen Zersetzungsablauf (wieder) in Bewegung bringt;

einem mechanischen Verfahren, das insbesondere mittels eines eigens dafür konstruierten Gerätes durchgeführt wird, das durch Anbohren der Adipocire und Einmischen des Reagenzmittels in die Bestattung den erwähnten Prozeß an Ort und Stelle ermöglicht;

wo notwendig, dem Einsatz eines geophysikalischen Verfahrens, um die exakten Einsatzstellen für das Verfahren von der Lage und Tiefe her zu bestimmen.

Verfahrensbeschreibung

Zur Durchführung des erfindungsgemäßen Verfahrens wird bevorzugt ein Kleinbohrgerät mit einem speziellen Bohrkopf und einer Trockeninjektionseinrichtung für Pulverstoffe - Förderschnecke oder Gebläse - eingesetzt. Dieses muß für die Arbeiten auf einem sensiblen Terrain wie einem in Betrieb befindlichen Friedhof hinsichtlich Emissionsschutz und Bodenlast geeignet sein.

Das Gerät wird auf das in Frage kommende Gräberfeld gefahren, auf dem die Sanierungsarbeiten ausgeführt werden sollen. Ist die Lage der Grablegen und deren Tiefe exakt bekannt, können die Ansatzpunkte für die Bohrungen genau eingemessen werden.

In der Regel werden 4 Bohrungen pro Grablege ausgeführt, die einen Durchmesser von etwa 100 mm haben und bis zur Unterkante der Grablege, d. h. allgemein des Sarges geführt werden. Durch Umkehren der Drehrichtung werden am Bohrkopf in der Regel zwei Rührsporne ausgefahren, die beim Rückziehen des Bohrgestänges einen zylindrischen Raum mit einem Durchmesser von 300 mm bearbeiten. Während des Hochziehens des Bohrgestänges bis ca. 50 cm oberhalb der Oberkante der Grablege wird eine definierte Menge Reagenzmittel aus dem Aufgabebehälter, der sich am oberen Ende des Bohrgestänges befindet, gefördert und eingemischt. Die Förderung geschieht bevorzugt durch eine in der rohrförmigen Seele des Bohrgestänges eingebaute Endlosschnecke oder durch ein an die rohrförmige Seele des Bohrgestänges angeschlossenes Gebläse.

Das Rührwerkzeug stellt den notwendigen direkten Kontakt zwischen der Adipocire und dem Reagenzmittel her. Beim weiteren Ziehen des Bohrgestänges wird der Boden aufgelockert und dadurch ein Luftzugang zur bearbeiteten Grablege geschaffen. Bevor das Bohrgestänge die Geländeoberkante erreicht, wird die Drehrichtung wieder geändert und die Rührsporne klappen ein. Dadurch erhält der Bohrkopf wieder seinen kleinsten Durchmesser (ca. 100 mm) und hinterläßt an der Oberfläche nur ein unscheinbares Loch. Um einen stärkeren länger andauernden Luftzugang herzustellen, können Rohre mit zum Beispiel ½" oder ¼" Nennweite in die Bohrlöcher eingebaut werden oder die Bohrlöcher mit einem inerten Granulat verfüllt werden, das sie für einen Gasaustausch offen hält.

Dieser Vorgang wird vorzugsweise insgesamt pro Grablege drei- bis viermal durchgeführt, gleichmäßig verteilt über deren Längsachse. Danach wird das Bohrgerät zum nächsten Einsatzort verfahren.

Thermochemische Wirkung des Reagenzmittels

Das Reagenzmittel kann aus mehreren Komponenten bestehen:

- einem Thermoreaktivmittel "Branntkalk"
- einem Thermoreaktivmittel "Natronlauge"
- einem Adsorptionsmittel, pulverförmige "Aktivkohle"
- einem Oxidationsmittel "Kaliumpermanganat"

in einem auf die Gegebenheiten eines Gräberfeldes anzupassenden Mischungsverhältnis.

Das Wirkungsschema dieses Reagenzmittels kann wie folgt beschrieben werden:

Durch den direkten Kontakt zwischen dem Thermoreaktivmittel, den Verwesungsresten und dem erdfeuchten Umgebungsboden wird die folgende chemische Reaktion in Gang gesetzt:

$$CaO + H_2O \blacktriangleright Ca(OH)_2 + x\ kJ$$

Das zur Reaktion notwendige Wasser wird durch einen Dehydratationsprozeß aus den Verwesungsresten und dem umliegenden Nekrosol entzogen. Durch die Isolierwirkung der Bodenumgebung steigt bei der entstehenden chemischen Reaktion die Temperatur bis auf über 300°C. Die den Verwesungsprozeß stoppenden Fettsäuren (Lipide), die hauptsächlich Palmitin- und Stearinsäuren sind, werden bei diesen Temperaturen abgeschmolzen, da deren Schmelzpunkte (61°C bzw. 83°C) weit unterhalb der Größenordnung der Reaktionstemperatur liegen.

Bei einer Reaktionstemperatur von 240° C zersetzt sich der beigemischte Bestandteil Kaliumpermanganat unter Sauerstoffabspaltung wie folgt:

$$10\ KMnO_4 \blacktriangleright 3K_2MnO_4 + 2\ K_2O \cdot 7\ MnO_2 + 6O_2$$

Der freiwerdende Sauerstoff diffundiert in die Verwesungsreste und das umgebende Nekrosol.

Kaliumpermanganat neutralisiert außerdem bekannterweise Geruchsstoffe verschiedenster Art in dem Bereich, in dem sie verteilt ist.

Nach Abschluß der primären thermischen Reaktion kann die Zersetzung durch Mikroben der von der Fettsäurekonservierung befreiten Verwesungsreste frisch ansetzen, begünstigt durch den freigesetzten Sauerstoff des Kalumpermanganats und den aufgelockerten Boden im Bereich der Bohrlöcher. Diese Bohrlöcher ermöglichen auch den Zugang von atmosphärischem Sauerstoff und begünstigen das Wiederaktivwerden von Mikrolebewesen.

Die nahezu vollständige Restzersetzung des Leichnams erfolgt voraussichtlich innerhalb von ½ Jahr unter der Voraussetzung, daß der Eintrag des Reagenzmittels zielgenau erfolgt ist.

Re-Lokalisation von Liegestätten

Für den Fall, daß komplette Gräberfelder abgeräumt sind und die genauen Liegestätten von Gräbern aufgrund des Fehlens von Grabsteinen nicht mehr nachzuvollziehen sind, ist der Einsatz von geophysikalischen Hilfsmitteln zur Lagerermittlung vorgesehen.

Das Auffinden einer Liegestätte einschließlich der Ermittlung deren Tiefe ist in den meisten Fällen durch Anwendung von Georadar möglich, das für archäologische Erkundigungen weltweit bekannt und seit längerem angewendet wird.

Eine bevorzugte Durchführungsart des erfindungsgemäßen Verfahrens und ein Ausführungsbeispiel einer erfindungsgemäßen Vorrichtung sind in den Zeichnungen dargestellt und werden nachstehend beschrieben. Hierin zeigen

Figur 1    eine Grabstätte in Vertikalschnitt;

Figur 2    eine Grabstätte mit einem erfindungsgemäßen Bohr- und Mischgerät bei Beginn der Verfahrensführung;

Figur 3    eine Grabstätte mit einem erfindungsgemäßen Bohr- und Mischgerät in einer ersten Phase der Verfahrensführung;

Figur 4    eine Grabstätte mit einem erfindungsgemäßen Bohr- und Mischgerät in einer zweiten Phase der Verfahrensführung;

Figur 5    eine Grabstätte nach Figur 1 nach Durchführung des erfindungsgemäßen Verfahrens;

Figur 6    eine Grabstätte in Draufsicht.

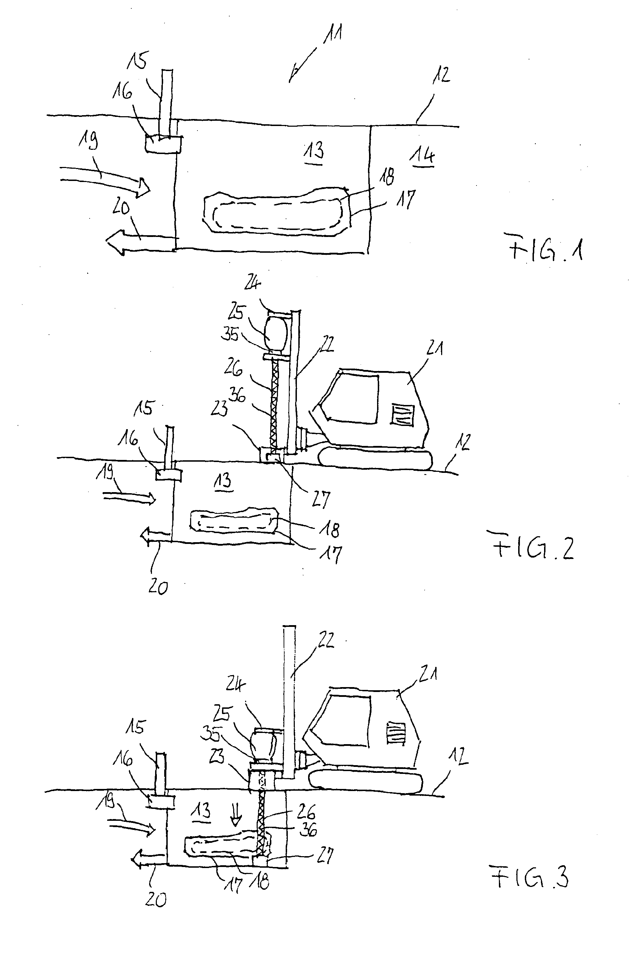

In Figur 1 ist eine Grabstätte 11 im vertikalen Schnitt mit der Geländeoberkante 12 erkennbar. Es ist das mit Erde verfüllte Grab 13 im Unterschied zum gewachsenen Boden 14 gezeigt. Am Kopf der Grabstätte steht ein Grabstein 15 auf einem Fundament 16. Innerhalb des Grabes 13 ist die Grablege 17 bestehend aus einem verrottetem Sarg und Leichenresten zu erkennen. Innerhalb der Grablege 17 sind mit gestrichelten Linien Verwesungsreste innerhalb eines luftabgeschlossenen Hohlraums 18 bezeichnet. Ein erster Pfeil 19 symbolisiert das Eintreten von Sickerwasser in das Grab 13. Ein zweiter Pfeil 20 symbolisiert das Austreten von kontaminiertem Wasser aus dem Grab 13.

In den weiteren Figuren sind gleiche Teile mit den gleichen Bezugsziffern wie vorstehend bezeichnet. Auf die vorangehende Beschreibung wird insoweit Bezug genommen.

In Figur 2 ist der Beginn des erfindungsgemäßen Verfahrens gezeigt. Ein fahrbares Bohr- und Mischgerät 21 steht neben dem Grab 13 auf der Geländeoberkante 12. An dem Fahrzeug ist ein Mäkler 22 mit einem Führungskopf 23 befestigt. In einem Schlitten 24, der an dem Mäkler 22 verfahrbar ist, ist ein Aufgabebehälter 25 und das obere Ende eines Bohrgestänges 26 gehalten. Dort sitzt auch ein hydraulisch angetriebener Drehmotor 35 für das Bohrgestänge 26. Das untere Ende des Bohrgestänges ist durch den Führungskopf 23 geführt. Am unteren Ende des Bohrgestänges 26 befindet sich ein Bohrkopf 27. Im hohlen Bohrgestänge 26 befindet sich eine zuschaltbare, durch den Drehmotor 35 antreibbare Förderschnecke 36, die eine dosierbare Menge von Pulver vom Aufgabebehälter 18 in den Hohlraum 18 fördern kann.

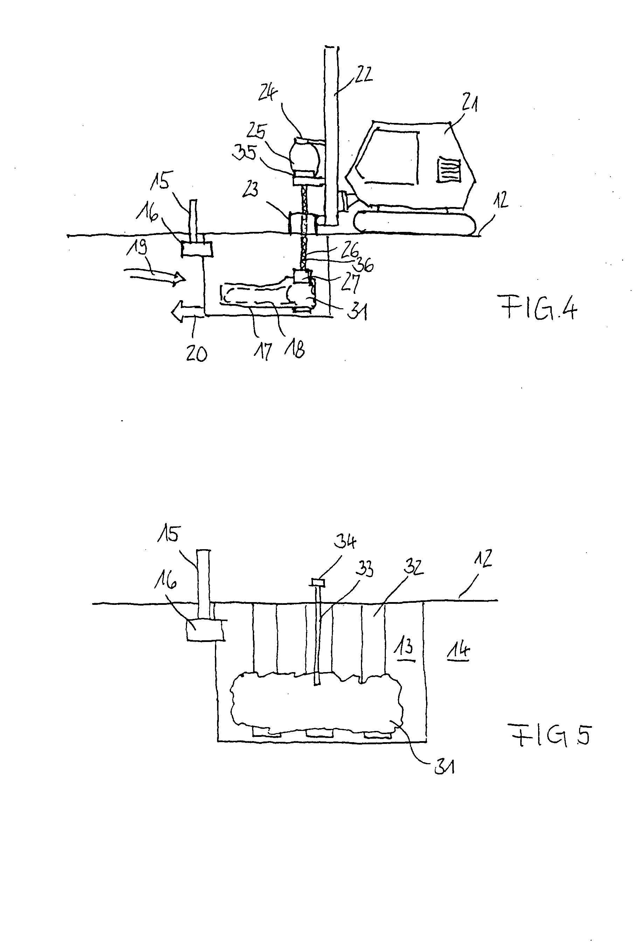

In Figur 3 sind gleiche Einzelheiten wie in Figur 2 mit gleichen Bezugsziffern belegt. Auf die vorangehende Beschreibung wird Bezug genommen. Abweichend von Figur 2 ist der Führungsschlitten 24 am Mäkler 22 in seine tiefste Position bis auf den Führungskopf 23 abgesenkt. Hierbei ist das Bohrgestänge 26 mit dem Bohrkopf 27 so tief in den Boden eingefahren, daß letzterer die Sohle des Grabes 13 erreicht hat.

In Figur 4 sind gleiche Einzelheiten wie in Figur 2 wiederum mit gleichen Bezugsziffern bezeichnet. Auf die obenstehende Beschreibung wird Bezug genommen. Abweichend von der Figur 3 ist der Führungsschlitten 24 mit dem Aufgabebehälter 25 und dem Bohrgestänge 26 mit dem Bohrkopf 27 am Mäkler 22 teilweise wieder nach oben gezogen, wobei aus dem Bohrgestänge 26 durch den Bohrkopf 27 ein Pulvereintrag 31 im Bereich der Grablege 17 erkennbar ist. Hierbei ist der Pulvereintrag in die Verwesungsreste in dem luftabgeschlossenen Hohlraum 18 eingemischt.

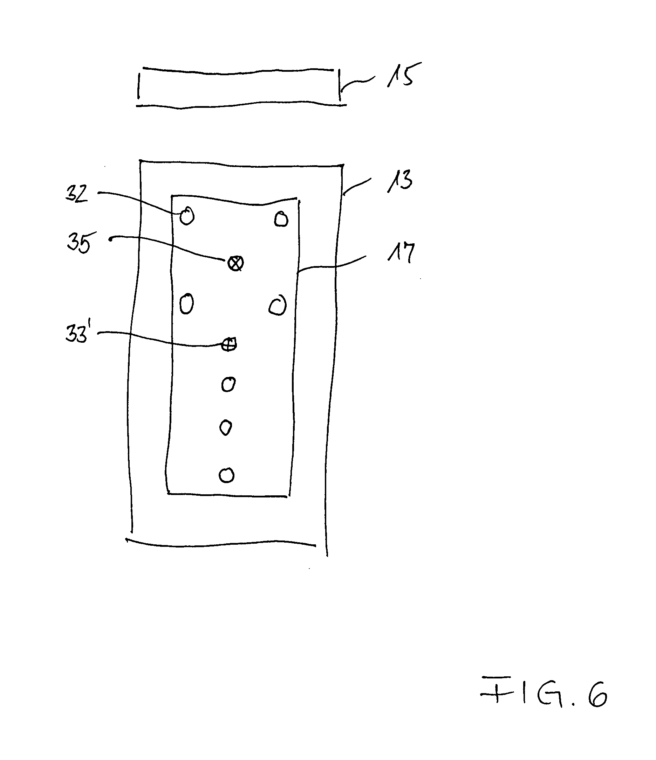

In Figur 5 ist der Zustand des Grabes erkennbar, nachdem der vorhergehende Sanierungsvorgang dreimal in einer Reihe zur Ausführung gebracht worden ist. Es sind drei bis zur Geländeoberkante 12 reichende Sanierungslöcher 32 erkennbar, in denen der Boden des Grabes 13 aufgelockert ist. Der Pulvereintrag 31 nimmt nunmehr den gesamten Raum der ursprünglichen Grablege ein, die aufgelöst und in ihren Konturen nicht mehr erkennbar ist. In eines der Sanierungslöcher ist ein Belüftungsrohr 33 eingebaut, z. B. mit ¾" Nennweite, an dessen oberem Ende ein Filter 34, z. B. mit Aktivkohleeinsatz sitzt, das die Belüftung dauerhaft verbessert.

In Figur 6 ist ein Grab 13 mit einer Grablege 17 und dem Grabstein 15 am Kopf der Grabstätte dargestellt. Es ist die Lage einer Mehrzahl von Sanierungslöchern 32, eines Belüftungslochs 33' und eines Sondenlochs 35 für eine Temperatursonde erkennbar. Das Belüftungsloch kann mit einem Rohr bestückt oder mit inertem Granulat verfüllt sein.

**Patentansprüche**

**1.** Verfahren zur Beschleunigung der Restverwesung von in der ursprünglichen Grablege liegenden Wachsleichen, **gekennzeichnet durch** die Schritte

- Anbohren der Grablege;
- Einbringen eines Reagenzmittels für eine beschleunigte Verwesung in die Bestattung;
- Einmischen des Reagenzmittels in die Bestattung mit mechanischen Mitteln.

2. Verfahren nach Anspruch 1,
   **dadurch gekennzeichnet,**
   **daß** als Reagenzmittel Branntkalk (CaO) verwendet wird.

3. Verfahren nach Anspruch 1 oder 2,
   **dadurch gekennzeichnet,**
   **daß** als Reagenzmittel Natronlauge (NaOH) in flüssiger Form verwendet wird.

4. Verfahren nach einem der Ansprüche 2 oder 3,
   **dadurch gekennzeichnet,**
   **daß** dem Reagenzmittel Kaliumpermanganat ($KMnO_4$) als Oxidationsmittel zugesetzt wird.

5. Verfahren nach einem der Ansprüche 2 bis 4,
   **dadurch gekennzeichnet,**
   **daß** dem Reagenzmittel Aktivkohle ($C_6$) als Adsorptionsmittel zugesetzt wird.

6. Verfahren nach einem der Ansprüche 1 bis 5,
   **dadurch gekennzeichnet,**
   **daß** ein erstes Bohrloch (33) als Entlüftungsbohrung verwendet wird.

7. Verfahren nach einem der Ansprüche 1 bis 6,
   **dadurch gekennzeichnet,**
   **daß** eines der Bohrlöcher (35) mit einer Temperatursonde bestückt wird.

8. Verfahren nach einem der Ansprüche 1 bis 7,
   **dadurch gekennzeichnet,**
   **daß** vor dem Reagenzmittel und/oder mit dem Reagenzmittel Heißwasserdampf - insbesondere mit einer Temperatur zwischen 80° und 120° C - eingebracht wird.

9. Verfahren nach einem der Ansprüche 1 bis 8,
   **dadurch gekennzeichnet,**
   **daß** das Reagenzmittel über ein Rohrgestänge mit Innenschnecke eingebracht wird.

10. Verfahren nach einem der Ansprüche 1 bis 8,
    **dadurch gekennzeichnet,**
    **daß** das Reagenzmittel über ein offenes Rohrgestänge mittels Druckluft eingeblasen wird.

11. Verfahren nach einem der Ansprüche 1 bis 10,
    **dadurch gekennzeichnet,**
    **daß** die Bohrlöcher (32) nach dem Einbringen des Reagenzmittels mit inertem Granulat verfüllt wird.

12. Verfahren nach einem der Ansprüche 1 bis 10,
    **dadurch gekennzeichnet,**
    **daß** in die Bohrlöcher (32) nach dem Einbringen des Reagenzmittels offene Belüftungsrohre (33), insbesondere mit Filteraufsätzen (34), eingebaut werden.

13. Bohr- und Mischgerät zur Durchführung des Verfahrens nach einem der Ansprüche 1 bis 12, umfassend ein höhenverfahrbares Bohrgestänge (26) mit einem Bohrkopf (27), an dem zumindest ein wegklappbarer Rührsporn, der in einer ersten Drehrichtung des Bohrkopfes (27) sich an das Bohrgestänge (26) anlegt und in einer zweiten Drehrichtung des Bohrkopfes (27) vom Bohrgestänge (26) etwa rechtwinklig wegklappt, angebracht ist,
    wobei das Bohrgestänge (26) rohrförmig ist und eine innenliegende relativ zum Bohrgestänge (26) antreibbare Förderschnecke (36) enthält und wobei das obere Ende des Bohrgestänges (26) mit einem Aufgabebehälter (25) für pulverförmiges Reagenzmittel verbunden ist.

14. Bohr- und Mischgerät zur Durchführung des Verfahrens nach einem der Ansprüche 1 bis 12, umfassend ein höhenverfahrbares Bohrgestänge (26) mit einem Bohrkopf (27), an dem zumindest ein wegklappbarer Rührsporn, der in einer ersten Drehrichtung des Bohrkopfes (27) sich an das Bohrgestänge (26) anlegt und in einer zweiten Drehrichtung des Bohrkopfes (27) vom Bohrgestänge (26) etwa rechtwinklig wegklappt, angebracht ist, wobei das Bohrgestänge (26) rohrförmig ist und wobei das obere Ende des Bohrgestänges (26) mit einem Aufgabebehälter (25) und einem Fördergebläse für pulverförmiges Reagenzmittel verbunden ist.

15. Reagenzmittel zur Beschleunigung der Restverwesung von in der ursprünglichen Grablege befindlichen Wachsleichen, umfassend Branntkalk (CaO) und Kaliumpermanganat (CMnO$_4$).

16. Reagenzmittel nach Anspruch 15,
zusätzlich umfassend Aktivkohle (C$_6$).

17. Reagenzmittel zur Beschleunigung der Restverwesung von in der ursprünglichen Grablege befindlichen Wachsleichen, umfassend Branntkalk (CaO) und flüssige Natronlauge (NaOH).

18. Reagenzmittel nach einem der Ansprüche 15 bis 17,
**dadurch gekennzeichnet,**
**daß** ihm Heißdampf zugesetzt ist.

FIG.1

FIG.2

FIG.3

FIG.4

FIG 5

FIG. 6

Europäisches
Patentamt

**EUROPÄISCHER RECHERCHENBERICHT**

Nummer der Anmeldung

EP 03 02 1264

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 1 167 360 A (C. MINER) 4. Juni 1913 (1913-06-04) * Anspruch * ----- | 15 | A61G17/00 |
| X | EP 0 747 064 A (PROGETTO EMME) 11. Dezember 1996 (1996-12-11) * Ansprüche 1,9 * ----- | 17 | |
| Y | US 3 685 303 A (L. TURZILLO) 22. August 1972 (1972-08-22) * Spalte 2, Zeile 42 – Spalte 3, Zeile 51 * * Abbildungen 1,2 * ----- | 13,14 | |
| Y | DE 44 17 887 A (G. GUDEHUS) 23. November 1995 (1995-11-23) * Ansprüche * * Abbildungen * ----- | 13 | |
| Y | EP 1 069 245 A (KELLER GRUNDBAU) 17. Januar 2001 (2001-01-17) * Ansprüche * * Abbildungen * ----- | 14 | RECHERCHIERTE SACHGEBIETE (Int.Cl.7) A61G B09B |
| A | WO 00/76448 A (MESSER GRIESHEIM) 21. Dezember 2000 (2000-12-21) * Ansprüche * ----- | 1,15,17 | B09C E02D |
| A | DE 22 59 686 A (H. HILLESHEIM) 12. Juni 1974 (1974-06-12) * Ansprüche * ----- | 1 | |

Der vorliegende Recherchenbericht wurde für alle Patentansprüche erstellt

| Recherchenort | Abschlußdatum der Recherche | Prüfer |
|---|---|---|
| Den Haag | 21. Juni 2004 | Laval, J |

## EP 1 457 188 A1

**ANHANG ZUM EUROPÄISCHEN RECHERCHENBERICHT**
**ÜBER DIE EUROPÄISCHE PATENTANMELDUNG NR.**        EP 03 02 1264

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-06-2004

| Im Recherchenbericht angeführtes Patentdokument | | Datum der Veröffentlichung | Mitglied(er) der Patentfamilie | | Datum der Veröffentlichung |
|---|---|---|---|---|---|
| US 1167360 | A | | KEINE | | |
| EP 0747064 | A | 11-12-1996 | IT | B0950293 A1 | 09-12-1996 |
| | | | AT | 205093 T | 15-09-2001 |
| | | | AU | 712184 B2 | 28-10-1999 |
| | | | AU | 5580596 A | 19-12-1996 |
| | | | CA | 2178572 A1 | 10-12-1996 |
| | | | DE | 69614923 D1 | 11-10-2001 |
| | | | DE | 69614923 T2 | 04-04-2002 |
| | | | EP | 0747064 A2 | 11-12-1996 |
| | | | ES | 2163553 T3 | 01-02-2002 |
| | | | JP | 9141228 A | 03-06-1997 |
| | | | US | 5814346 A | 29-09-1998 |
| US 3685303 | A | 22-08-1972 | KEINE | | |
| DE 4417887 | A | 23-11-1995 | DE | 4417887 A1 | 23-11-1995 |
| EP 1069245 | A | 17-01-2001 | FR | 2796405 A1 | 19-01-2001 |
| | | | AT | 256791 T | 15-01-2004 |
| | | | DE | 50004768 D1 | 29-01-2004 |
| | | | EP | 1069245 A1 | 17-01-2001 |
| WO 0076448 | A | 21-12-2000 | DE | 19926579 A1 | 04-01-2001 |
| | | | WO | 0076448 A2 | 21-12-2000 |
| DE 2259686 | A | 12-06-1974 | DE | 2259686 A1 | 12-06-1974 |

EPO FORM P0461

Für nähere Einzelheiten zu diesem Anhang : siehe Amtsblatt des Europäischen Patentamts, Nr. 12/82

12